# EUROPÄISCHE PATENTANMELDUNG

(11) **EP 1 431 777 A1**
(43) Veröffentlichungstag der Anmeldung: **23.06.2004**
(21) Anmeldenummer: 02028670.4
(22) Anmeldetag: 20.12.2002
(51) Int. Cl.: G01T 1/29, G03B 42/02, H04N 1/00, H04N 1/04, H04N 1/12, H04N 1/14, G03B 42/00

(54) **Wandmontierbare Scanvorrichtung zum Erfassen einer Bildinformation**

(71) Anmelder: Agfa-Gevaert AG, 51373 Leverkusen (DE)
(72) Erfinder: Müller, Jürgen, 81545 München (DE); Reichart, Michael, 85551 Kirchheim (DE)

(57) **Zusammenfassung**

Die Erfindung betrifft eine Scanvorrichtung zum Erfassen einer Bildinformation eines fotostimulierbaren Bildträgers (44), wobei die Scanvorrichtung (10) derart für eine Wandmontage ausgebildet ist, dass die Scanvorrichtung (10) mit einer größten Seitenfläche im Wesentlichen parallel zu einer Wand an der Wand montierbar ist.

## Beschreibung

Die vorliegende Erfindung betrifft eine Scanvorrichtung zum Erfassen einer Bildinformation eines fotostimulierbaren Bildträgers.

Eine derartige gattungsgemäße Scanvorrichtung ist aus der DE 196 46 606 bekannt. Die Bildinformation, die durch die Scanvorrichtung erfasst werden soll, ist nach dieser Druckschrift auf einer Phosphorfolie gespeichert, die einen fotostimulierbaren Bildträger bildet und sich in einer sogenannten Röntgenkassette befindet. Zum Auslesen des als latentes Bild in der Phosphorfolie abgespeicherten Röntgenbilds wird die Röntgenkassette in die Scanvorrichtung eingegeben. Dort öffnet eine mechanische Einrichtung die Röntgenkassette und entnimmt die Phosphorfolie. Über eine Transporteinrichtung wird die Phosphorfolie dann einer Lesestation zugeführt. Die Lesestation umfasst eine Ausleseeinrichtung, durch die die Phosphorfolie angeregt wird, worauf sie Emissionslicht aussendet, das gesammelt, verstärkt und digitalisiert an einen Computer mit Bildspeicher weitergeleitet wird. Durch den besonderen Transportvorgang der Kassette innerhalb der Scanvorrichtung wird eine geringe Standfläche der Scanvorrichtung erreicht. Nachteilig ist jedoch immer noch, dass durch die Scanvorrichtung wertvoller Standplatz eingenommen wird. Da ein wesentlicher Anwendungsbereich der Scanvorrichtung ein digitales Radiografie-Verfahren ist, das in der Regel in einem wegen der notwendigen Abschirmung räumlich sehr begrenzten Röntgenraum durchgeführt werden sollte, ist die von einer Scanvorrichtung benötigte Standfläche von großer Bedeutung.

Der Erfindung liegt daher die Aufgabe zugrunde, eine Scanvorrichtung bereitzustellen, die auch in Räumlichkeiten verwendet werden kann, die sehr wenig freien Standplatz bieten.

Zur Lösung dieser Aufgabe dient eine gattungsgemäße Scanvorrichtung, die derart für eine Wandmontage ausgebildet ist, dass die Scanvorrichtung mit einer größten Seitenfläche im Wesentlichen parallel zu einer Wand an der Wand montierbar ist.

Unter einer Wandmontage im Sinne der Erfindung ist hierbei jede Art der Anbringung an eine Wand zu verstehen, bei welcher keine Standfläche für die Scanvorrichtung auf dem Boden erforderlich ist. Die Scanvorrichtung ist dabei im Wesentlichen nur an der Wand befestigt. Die Befestigung an der Wand kann hierbei direkt, z. B. durch Aufhängen, Festschrauben und dergleichen, oder indirekt, z. B. durch Aufstellen oder Einsetzen der Scanvorrichtung auf bzw. in eine an der Wand befestigte Halterung oder durch Anbringen an ein an der Wand befestigtes und zur Höhenverstellung der Scanvorrichtung ausgebildetes Halterungssystem, erfolgen.

Diese erfindungsgemäße Scanvorrichtung weist im Wesentlichen zwei Vorteile auf. Einerseits kann die erfindungsgemäße Scanvorrichtung an der Wand montiert werden, so dass sie keinerlei Standplatz benötigt und auf diese Weise auch in einer Höhe montiert werden kann, die im Stehen ein komfortables Arbeiten, z. B. das Bereitstellen und Entfernen der auszulesenden bzw. ausgelesenen Bildträger, an der Scanvorrichtung ermöglicht. Andererseits wird durch die Anordnung der Scanvorrichtung mit einer größten Seitenfläche im Wesentlichen parallel zu einer Wand, an der die Scanvorrichtung montiert wird, gewährleistet, dass eine Behinderung durch die Scanvorrichtung weitgehend vermieden wird. Sie liegt vielmehr flach an der Wand an.

Die Scanvorrichtung kann zur hängenden Wandmontage mindestens eine Ausgestaltung zur Aufhängung an die Wand, insbesondere mindestens ein Aufhängeelement aufweisen. Eine Ausgestaltung zur Aufhängung an die Wand kann neben einem Aufhängeelement aber auch eine Vertiefung oder eine Öffnung sein, in die ein Befestigungselement zur Befestigung an der Wand eingreifen kann.

Eine besonders vorteilhafte Ausgestaltung der Erfindung sieht vor, dass die mindestens eine Ausgestaltung zur Aufhängung derart ausgebildet ist, dass die Scanvorrichtung höhenverstellbar ist. Alternativ oder zusätzlich kann auch das Befestigungselement, das die Wand mit der Scanvorrichtung verbindet, zur Höhenverstellbarkeit ausgebildet sein. Die Höheverstellbarkeit bietet zahlreiche Vorteile. Erstens kann eine Scanvorrichtung je nach Bedarf auf diese Weise entweder im Sitzen oder im Stehen bedient werden. Zweitens kann die Höhe der Scanvorrichtung der Größe des jeweiligen Anwenders und damit den individuellen Bedürfnissen angepasst werden. Drittens kann die Scanvorrichtung, wenn sie gerade nicht benötigt wird, in eine Position überführt werden, in der sie niemanden behindert.

Vorteilhafterweise kann die Scanvorrichtung eine Kassettenhalterung zur Lagerung mindestens einer Kassette mit einem fotostimulierbaren Bildträger und/oder zum Bereitstellen einer Kassette mit einem fotostimulierbaren Bildträger für einen Scanvorgang aufweisen. Die Kassetten können folglich dort gelagert beziehungsweise bereitgestellt werden, wo sie schließlich auch tatsächlich benötigt werden. Auf diese Weise werden lange Wege durch eine separate Lagerung von Kassetten gespart.

Insbesondere kann ein Gehäusebereich der Scanvorrichtung ein Halterungselement der Kassettenhalterung bilden, auf der mindestens eine Kassette positionierbar ist. So wird ein sehr kompaktes System geschaffen, wobei die Kassettenhalterung in diesem Fall auch eine sehr hohe Stabilität aufweist.

Alternativ oder zusätzlich kann die Kassettenhalterung ein Halterungselement aufweisen, das an einem Gehäuse der Scanvorrichtung, insbesondere lösbar, befestigt ist. Diese Ausgestaltung hat den Vorteil, dass das Halterungselement für seinen eigentlichen Zweck optimal gestaltet sein kann. Wenn es lösbar befestigt ist, kann das Halterungselement leicht entfernt werden, wenn gerade kein Bedarf an einer Kassettenhalterung besteht.

Die Kassettenhalterung kann ein Halterungselement aufweisen, das im Wesentlichen vor oder unter einem Gehäuse der Scanvorrichtung angeordnet ist. Insbesondere wenn ein anderes Gerät vor dem Scanner positioniert werden soll, ist es sinnvoll, den Raum unterhalb der Scanvorrichtung zur Halterung von Kassetten zu nutzen und dementsprechend dort auch ein Halterungselement anzuordnen. Ist dies nicht der Fall, ist, wie bereits oben erwähnt, die Positionierung der Kassetten vor dem Gehäuse der Scanvorrichtung vorteilhaft, weil so eine hohe Stabilität gewährleistet ist.

Eine weitere besonders vorteilhafte Ausgestaltung der Erfindung sieht vor, dass die Kassettenhalterung derart ausgebildet ist, dass die durch die Kassettenhalterung aufgenommene mindestens eine Kassette im Wesentlichen parallel zu einer größten Seitenfläche der Scanvorrichtung angeordnet ist. Auf diese Weise können die Kassetten so positioniert werden, dass sie nicht unnötig von der Wand hervorstehen.

Weiterhin kann die Scanvorrichtung derart ausgebildet sein, dass der fotostimulierbare Bildträger innerhalb der Scanvorrichtung im Wesentlichen parallel zu einer größten Seitenfläche der Scanvorrichtung auslesbar und/oder bewegbar ist. Dadurch wird eine äußerst flache Gestaltung der Scanvorrichtung ermöglicht.

Weitere Einzelheiten, Merkmale und Vorteile der Erfindung ergeben sich aus den im Folgenden anhand von Zeichnungen beschriebenen Ausführungsbeispielen. Die erfindungsgemäße Scanvorrichtung wird in der Beschreibung der Ausführungsbeispiele als Scanner bezeichnet.

Es zeigen:
- Fig.1: ein schematisch dargestellter Aufbau einer Ausführungsform einer Vorrichtung mit einem erfindungsgemäßen Scanner;
- Fig. 2: eine schematische Darstellung einer weiteren Ausführungsform einer Vorrichtung mit einem erfindungsgemäßen Scanner;
- Fig. 3: eine schematisch dargestellte Frontansicht eines erfindungsgemäßen Scanners;
- Fig. 4: eine schematisch dargestellte Rückansicht eines erfindungsgemäßen Scanners;
- Fig. 5: eine teilweise als Querschnitt dargestellte schematische Ansicht eines erfindungsgemäßen Scanners;
- Fig. 6: eine schematisch dargestellte Frontansicht einer Hardcopyeinrichtung;
- Fig. 7: eine schematisch dargestellte Rückansicht einer Hardcopyeinrichtung; und
- Fig. 8: eine teilweise geschnittene Darstellung einer Hardcopyeinrichtung.

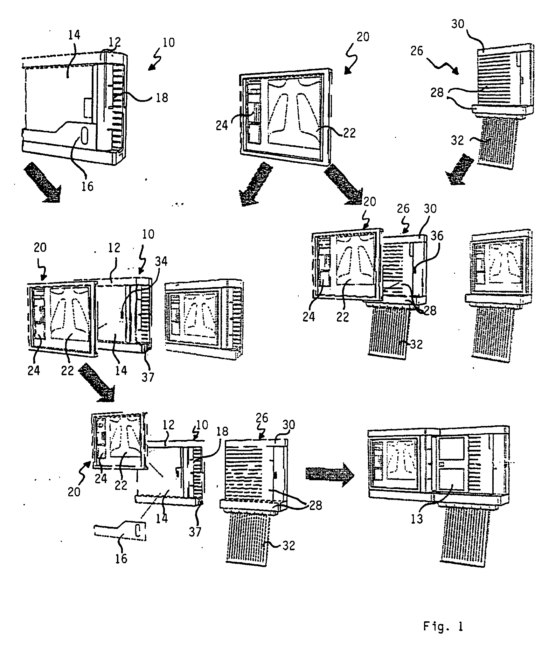

Figur 1 zeigt eine modular aufgebaute Vorrichtung zur Durchführung eines digitalen Radiographie-Verfahrens. Die hier dargestellte Ausführungsform dieser Vorrichtung umfasst im Wesentlichen bis zu drei Komponenten.

Eine erste Komponente bildet ein erfindungsgemäßer Scanner 10 mit einem Gehäuse 12. Der Scanner 10 dient den Erfassen einer Bildinformation eines in einer Kassette 13 bereitgestellten fotostimulierbaren Bildträgers, welcher eine Phosphorschicht umfaßt. Die Kassette 13 mit dem auszulesenden Bildträger wird hierzu einer seitlichen Öffnung 18 des Scanners 10 zugeführt. Dies ist im rechten unteren Teil der Figur 1 beispielhaft dargestellt. Aus Gründen einer besseren Anschaulichkeit wurde auf die Darstellung der Kassette 13 in den anderen Figurenteilen verzichtet.

Der Scanner 10 weist im Frontbereich, d. h. in einem Bereich vor dem Scanner 10, eine Kassettenhalterung auf, welche zur Aufnahme mindestens einer Kassette 13 mit dem auszulesenden Bildträger ausgebildet ist. Ein Halterungselement 14 der Kassettenhalterung wird hierbei durch einen Gehäusebereich, im dargestellten Beispiel eine Frontplatte, des Scanners 10 gebildet. Ein weiteres, abnehmbares Halterungselement 16 ist derart am Gehäuse 12 des Scanners 10 angeordnet, dass mindestens eine Kassette 13 zwischen den beiden Halterungselementen 14 und 16 gehalten werden kann. In der Kassettenhalterung können Kassetten 13 im Frontbereich des Scanners 10 gelagert werden, bevor oder nachdem sie im Scanner 10 ausgelesen werden bzw. worden sind.

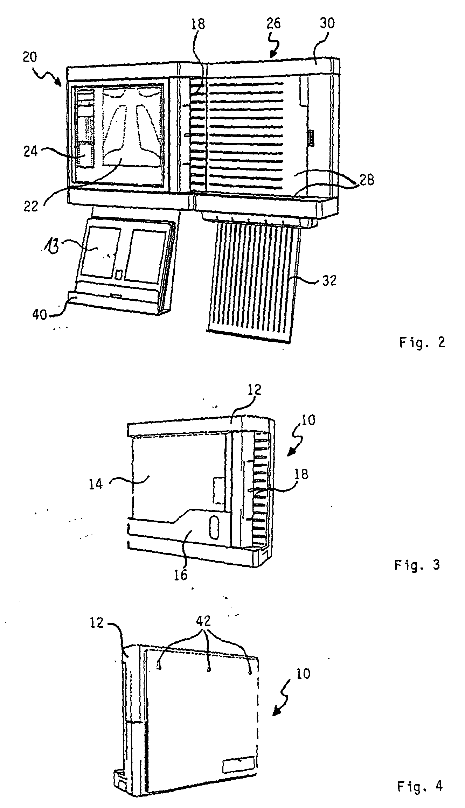

Alternativ oder zusätzlich kann aber auch eine laterale Kassettenhalterung (nicht dargestellt) vorgesehen sein, die seitlich des Scanners 10 positioniert ist und auf diese Weise gleichzeitig dazu dient, eine oder mehrere Kassetten 13 für den Scanprozess bereitzustellen. Vorzugsweise ist die laterale Kassettenhalterung derart ausgebildet und im Bereich der Öffnung 18 des Scanners 10 angeordnet, dass die von ihr aufgenommenen Kassetten direkt der Öffnung 18 des Scanners 10 zugeführt werden können. Wie weiter unten im Zusammenhang mit dem in Figur 2 dargestellten Ausführungsbeispiel noch näher erläutert wird, kann die Kassettenhalterung auch unterhalb des Scanners 10 positioniert werden.

Da der in Figur 1 dargestellte Scanner 10 dazu geeignet ist, Bildinformationen von Bildträgern unterschiedlicher Größe zu erfassen, müssen auch die Halterungselemente 14 bzw. 16 der Kassettenhalterung derart ausgebildet sein, dass sie unterschiedlich große Kassetten aufnehmen können. Aus diesem Grund ist es auch zweckmäßig, mehrere Kassettenhalterungen vorzusehen, die für jeweils eine Kassettengröße optimal dimensioniert sind. Generell erhöht die Anordnung einer Kassettenhalterung in der unmittelbaren Nähe des Scanners 10 die Geschwindigkeit des Arbeitsvorgangs, der mit dem Auslesen der Bildinformation verbunden ist. Vorteilhafterweise ist die Kassettenhalterung stets parallel zum Scanner 10 angeordnet.

Als zweite Komponente der Vorrichtung ist eine Workstationeinrichtung 20 zum Sichtbarmachen der erfassten Bildinformation vorgesehen. Neben einer zentralen Recheneinheit (nicht dargestellt), in welcher die im Scanner 10 erfassten, digitalen Bildinformationen verarbeitet und/oder gespeichert werden können, umfasst die Workstationeinrichtung 20 einen Bildschirm 22 zur visuellen, insbesondere graphischen, Darstellung der erfassten Bildinformation. Um Platz zu sparen, wird als Bildschirm 22 vorzugsweise ein Flachbildschirm auf der Basis von Flüssigkristallen (LCDs) und Dünnschichttransistoren (TFTs) eingesetzt.

Zusätzlich zur Darstellung der erfassten Bildinformation kann der Bildschirm 22 auch so ausgestaltet sein, dass dieser als Hintergrundbeleuchtung für konventionelle Röntgenfilme dienen kann. Vorzugsweise ist hierzu der Bildschirm 22 in einem Beleuchtungsmodus betreibbar, in welchem die Bildschirmfläche einen gleichmäßig hellen, Licht aussendenden Hintergrund bildet. Vor diesen hellen Hintergrund können Röntgenfilme angebracht und betrachtet werden.

Darüber hinaus umfasst die Workstationeinrichtung 20 ein Bedienfeld 24 zur Steuerung der Workstationeinrichtung 20 und/oder zum Modifizieren der erfassten Bildinformation. Das Bedienfeld 24 ist vorzugsweise als sogenanntes Touch Screen ausgebildet, bei welchem in einer entsprechend ausgestalteten Anzeigeeinrichtung Symbole für einzelne Steuerungselemente und/oder Betriebsmodi angezeigt und durch Berühren betätigt bzw. ausgewählt werden können.

Vorzugsweise werden der Bildschirm 22 und das Bedienfeld 24 in einem einzigen Touch Screen zusammengefaßt, bei welchem in der Anzeigeeinrichtung neben den Steuerungselementen und/oder Betriebsmodi auch die erfaßten digitalen Bildinformationen darstellt werden. Hierdurch wird eine einfach herzustellende und besonders kompakte Variante der Vorrichtung erhalten.

Alternativ zu der in Figur 1 dargestellten Workstationeinrichtung 20 kann diese auch lediglich einen Bildschirm 22 oder ein Bedienfeld 24 aufweisen. Eine Kombination dieser beiden Elemente, die eine Einheit bilden, hat jedoch den Vorteil, dass jede Modifizierung der Bildinformation zeitgleich auf dem Bildschirm 22 dargestellt werden kann, wodurch der Anwender der Vorrichtung den jeweiligen Effekt der Modifizierungen unmittelbar kontrollieren kann.

Durch das Bedienfeld 24 können auch die anderen Komponenten der Vorrichtung bedient werden, so dass das Bedienfeld 24 als zentrale Steuerplattform dient.

Wie aus Figur 1 ersichtlich ist, ist der Bildschirm 22 im Wesentlichen parallel zu einer größten Seitenfläche der Workstationeinrichtung 20 angeordnet. Durch Verwendung eines oben beschriebenen Flachbildschrims wird so eine besonders flache Gestaltung, also eine geringe Gerätetiefe, der Workstationeinrichtung 20 gewährleistet.

Als eine dritte Komponente ist eine Hardcopyeinrichtung 26 vorgesehen. Diese Hardcopyeinrichtung 26 dient der Herstellung einer Hardcopy mit der ausgelesenen Bildinformation des Bildträgers ausgehend von einem Hardcopyrohling, wie z. B. einem entsprechend geeigneten Bogen aus Papier, beschichtetem Papier oder Kunststofffolie. Ein Gehäusebereich der Hardcopyeinrichtung 26 bildet eine Kassettenhalterung 28, welche zur Aufnahme wenigstens einer Kassette 13 ausgebildet ist.

Außerdem kann das Innere des Gehäuses 30 zur Aufnahme von Hardcopyrohlingen ausgebildet sein, wobei das Gehäuse 30 insbesondere im Bereich der Kassettenhalterung 28 geöffnet werden kann, um die Hardcopyrohlinge in die Hardcopyeinrichtung 26 einzuführen.

Für fertige Hardcopies, gegebenenfalls aber auch für Hardcopyrohlinge, ist eine vorzugsweise lösbar am Gehäuse 30 der Hardcopyeinrichtung 26 befestigte Halterung 32 vorgesehen. Die Halterung 32 ist im dargestellten Beispiel eine Auflagefläche mit einer Stoßkante am unteren Ende der Fläche, die in einem flachen Winkel zur Vertikalen geneigt ist.

Da die Hardcopyrohlinge bzw. die Hardcopies stets parallel zur größten Seitenfläche der Hardcopyeinrichtung 26 aufgenommen, gelagert sowie während des Bedruckens transportiert und ausgegeben werden, ist eine äußerst flache Ausgestaltung der Hardcopyeinrichtung 26 realisiert.

Die Workstationeinrichtung 20 kann nun entweder vor dem Gehäuse 12 des Scanners 10 und/oder vor dem Gehäuse 30 der Hardcopyeinrichtung 26 angeordnet und an dem jeweiligen Gehäuse 12 bzw. 30, vorzugsweise lösbar, befestigt werden. Sowohl die Hardcopyeinrichtung 26 als auch der Scanner 10 können zur Verbindung mit der Workstationeinrichtung 20 sogenannte "plug and play"-Anschlüsse 34 und 36 aufweisen. Durch die Verbindung der einzelnen Komponenten mittels "plug and play"-Anschlüssen kann ein Daten- und Stromfluß zwischen den Komponenten auf einfache Weise realisiert werden. Mindestens ein entsprechender Anschluß, der in Figur 1 aus perspektivischen Gründen nicht zu sehen ist, befindet sich an der Workstationeinrichtung 20. Durch die "plug and play"-Anschlüsse wird ein einfaches Zusammensetzen der einzelnen Komponenten ermöglicht, ohne die Komponenten durch Leitungen verbinden zu müssen.

Dieses modulare System wird außerdem durch geeignete Ausgestaltungen zur mechanische Kopplung der Komponenten, wie z. B. einfach lösbare Klemmund/oder Schnappverbindungen am Gehäuse 12 bzw. 30 der Komponenten, ergänzt. Je nach Ausgestaltung der Komponenten kann vorgesehen sein, dass, wie hier für das Halterungselement 16 beispielhaft gezeigt, einzelne Elemente vor der modularen Kopplung entfernt werden müssen.

Neben den oben beschriebenen Kombinationen kann beispielsweise auch eine Kopplung von Scanner 10 und Hardcopyeinrichtung 26 oder eine Kombination von Hardcopyeinrichtung 26 und Workstationeinrichtung 20 vorgesehen sein.

Bei der Kombination von Scanner 10 und Hardcopyeinrichtung 26 kann die erfasste Bildinformation, ohne vorher auf einem Bildschirm 22 betrachtet zu werden, als Hardcopy ausgegeben werden. Ein solches System ist für solche Anwendungsfälle, wie z. B. Standarduntersuchungen oder Untersuchungsreihen, besonders geeignet, in denen Hardcopies einer großen Anzahl von Röntgenbildern angefertigt werden müssen, ohne dass eine vorherige visuelle Kontrolle und gegebenenfalls Manipulation der erfassten Bilddaten erwünscht oder erforderlich ist.

Besonders bevorzugt ist die Ausführungsform mit allen drei Komponenten, nämlich Scanner 10, Workstationeinrichtung 20 und Hardcopyeinrichtung 26. Wie bei der Verbindung von zwei Komponenten kann die Hardcopyeinrichtung 26 zu diesem Zweck durch "plug and play"-Anschlüsse 37 und zusätzlich gegebenenfalls auch durch mechanische Ausgestaltungen mit dem Scanner 10 verbunden werden. Diese beiden Komponenten sind dann entlang einer Ebene nebeneinander angeordnet. Die Kassettenhalterung 28 der Hardcopyeinrichtung 26 kann in diesem Fall genauso wie bei einer Kombination von Scanner 10 und Hardcopyeinrichtung 26 der Zuführung von Kassetten 13 in die Öffnung 18 des Scanners 10 dienen. Diese Funktion kann auch realisiert werden, wenn die Hardcopyeinrichtung 26 lediglich nahe dem Scanner 10 angeordnet ist, wobei die Kassettenhalterung 28 in diesem Fall entsprechend modifiziert werden muß. Außerdem ist eine Verbindung von Scanner 10 und Hardcopyeinrichtung 26 durch ein Zwischenelement denkbar, das gegebenenfalls auch zur Bereitstellung der Kassette für den Scanner 10 beitragen kann.

Es ist außerdem zu berücksichtigen, dass auch die Kombination von Workstationeinrichtung 20 und Hardcopyeinrichtung 26, wie sie in der Figur 1 dargestellt ist, mit dem Scanner seitlich verbunden werden kann.

Durch die Kombination der drei Elemente Scanner 10, Workstationeinrichtung 20 und Hardcopyeinrichtung 26 wird ein äußerst kompaktes System bereitgestellt, das alle Funktionen eines herkömmlichen, sehr viel Raum einnehmenden Röntgenarbeitsplatzes bestens erfüllt. Im Gegensatz zu den aus dem Stand der Technik bekannten "stand alone"-Geräten ermöglicht die Erfindung eine vollständige Installation des Röntgenarbeitsplatzes in einem Röntgenraum, der durch die notwendige Abschirmung räumlich meist sehr begrenzt ist.

In Figur 2 ist eine weitere alternative Ausführungsform einer Vorrichtung zur Durchführung eines digitalen Radiographie-Verfahrens schematisch dargestellt. Auch hier besteht die Vorrichtung aus einem Scanner (nicht sichtbar), vor dem eine Workstationeinrichtung 20 angebracht ist und neben dem eine Hardcopyeinrichtung 26 positioniert ist. Auch diese Hardcopyeinrichtung 26 weist eine Halterung 32 für mindestens eine Hardcopy und/oder mindestens einen Hardcopyrohling auf. Unterhalb der Workstationeinrichtung 20 ist außerdem eine zur Aufnahme mehrerer Kassetten 13 ausgebildete weitere Kassettenhalterung 40 vorgesehen, in welcher die Kassetten 13 vorzugsweise vor und/oder nach dem Auslesen im Scanner 10 gelagert werden können. Die Kassettenhalterung 40 kann entweder am Scanner oder an der Workstationeinrichtung 20, insbesondere lösbar, befestigt sein.

Soll die Bildinformation eines in einer Kassette 13 befindlichen Bildträgers ausgelesen werden, wird die entsprechende Kassette 13 von einem Bediener aus der Kassettenhalterung 40 entnommen und an der Öffnung 18 des Scanners positioniert. Die Kassette 13 wird hierzu an die Kassettenhalterung 28 am Gehäuse 30 der Hardcopyeinrichtung 26 angelegt und schließlich zur Öffnung 18 des Scanners geführt. Diese Position der Kassette 13 ist auch im rechten unteren Teil des in Figur 1 dargestellten Ausführungsbeispiels gezeigt. Von dieser Position aus kann der in der Kassette 13 befindliche Bildträger mit einem, vorzugsweise im Scanner befindlichen, Transportmechanismus aus der Kassette 13 in den Scanner eingezogen und dort ausgelesen werden. Nach dem Auslesen wird der Bildträger wieder in die Kassette 13 zurückgeführt, wonach diese von der Öffnung 18 des Scanners entfernt und gegebenenfalls wieder in der Kassettenhalterung 40 abgelegt werden kann.

Figur 3 zeigt den in Figur 1 dargestellten Scanner 10 in einer vergrößerten Frontansicht. Die Ausführungen im Zusammenhang mit dem in Figur 1 beschriebenen Scanner 10 gelten entsprechend. Eine Rückansicht dieses Scanners 10 ist schematisch in Figur 4 wiedergegeben. In dieser Ansicht sind Ausgestaltungen zur Aufhängung 42 dargestellt. Diese Ausgestaltungen 42 können mit an einer Wand vorgesehenen Schienen oder anderen Befestigungselementen wechselwirken, die eine Höhenverstellbarkeit erlauben. Alternativ kann die Höhenverstellbarkeit auch durch entsprechende Ausgestaltungen 42 zur Aufhängung an dem Gehäuse 12 des Scanners 10 erreicht werden. Die Höhenverstellbarkeit ist äußerst vorteilhaft, da auf diese Weise die Position des Scanners 10 den individuellen Bedürfnissen angepasst werden kann. Durch die Aufhängung des Scanners 10 wird gleichzeitig eine Aufhängung der anderen mit dem Scanner verbundenen Komponenten erreicht.

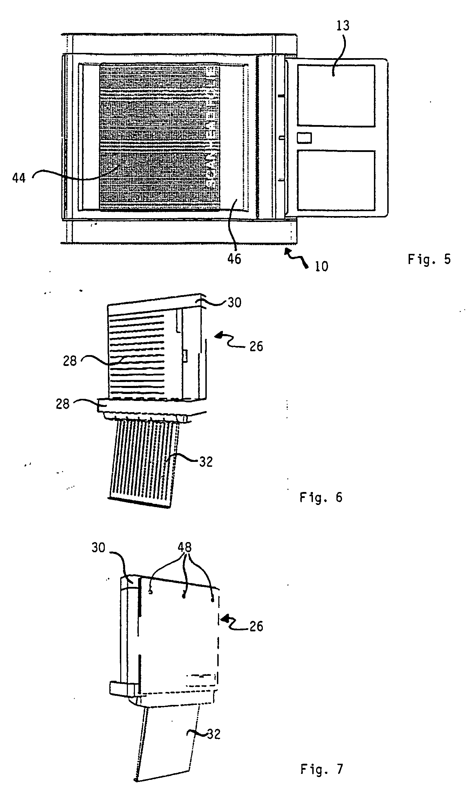

In Figur 5 ist der Scanner 10 in einer aufgehängten Stellung teilweise im Querschnitt dargestellt. In diesem Beispiel liegt der mittels einer geeigneten Transporteinrichtung (nicht dargestellt) aus der Kassette 13 entnommene Bildträger 44 auf einer Scanbühne 46 im Inneren des Scanners 10 und kann in dieser Lage ausgelesen werden. Die Scanbühne 46 ist im Wesentlichen parallel oder leicht geneigt zu der Wand angeordnet, an welcher der Scanner 10 aufgehängt ist. Dadurch wird eine besonders flache Ausführung des Scanners 10 gewährleistet, wobei eine Gerätetiefe von weniger als 30 cm erreicht wird.

Die Bildinformation wird vorzugsweise zeilenweise ausgelesen, wobei ein beweglicher Scankopf über den auf der Scanbühne 46 im Scanner 10 liegenden Bildträger 44 bewegt wird oder der Bildträger 44 an einem stationären Scankopf vorbeibewegt wird. Letzeres erfolgt vorzugsweise während der Entnahme des Bildträgers 44 aus der Kassette 13 oder dessen Rückführung in die Kassette 13. Der entsprechende stationäre Scankopf ist hierbei im Bereich der Öffnung 18 im Innern des Scanners 10 angeordnet.

Zur Erreichung einer möglichst geringen Gerätetiefe des Scanners 10 ist ein besonders kompakter Aufbau des Scankopfes erforderlich. Der Scankopf weist hierzu eine linienförmige Lichtquelle zur Beleuchtung eines linienförmigen Bereichs des Bildträgers und einen linienförmigen Detektor zur ortsaufgelösten Erfassung des im beleuchteten Bereich des Bildträgers angeregten Emissionslichts auf. Als Lichtquelle werden vorzugsweise Leuchtdioden oder Laserdioden eingesetzt, die in der Weise entlang einer Reihe angeordnet sind, dass sich deren Lichtstrahlen derart überlagern, dass auf dem Bildträger ein linienförmiger Bereich mit im Wesentlichen konstanter Intensität beleuchtet wird. Als ortsauflösender Detektor wird vorzugsweise ein lineares Array aus Photodioden oder Charge-Coupled-Devices (CCDs) eingesetzt. Ein derart aufgebauter Scankopf erlaubt ein zeilenweises und damit schnelles Auslesen von Bildinformation aus dem Bildträger und ist darüber hinaus sehr kompakt, so dass hierdurch eine sehr geringe Gerätetiefe des Scanners 10 und damit auch der gesamten Vorrichtung zur Durchführung eines digitalen Radiographie-Verfahrens erzielt wird.

Werden Scankopf und Bildträger mit einem geeigneten Transportmechanismus kontinuierlich relativ zueinander bewegt und dabei sukzessive Zeile für Zeile der Bildinformation des Bildträgers ausgelesen, werden schließlich Daten eines Gesamtbildes der im Bildträger gespeicherten Bildinformation erhalten. Die, insbesondere digitalen, Daten können dann in einer zentralen Recheneinheit, insbesondere in der Workstationeinrichtung 20, verarbeitet, dargestellt und/oder gespeichert werden.

Ein entsprechender Transportmechanismus zur Bewegung des Scankopfes über den Bildträger umfaßt vorzugsweise einen Linearantrieb, bei welchem die Rotationsbewegung eines Antriebsmotors in eine Linearbewegung eines Seilantriebs, durch welchen der Scankopf bewegt wird, umgesetzt wird. Der Scankopf wird hierbei bevorzugt an der Scanbühne 46 selbst geführt, wobei die Scanbühne entsprechende separate Führungsflächen aufweisen kann, an welchen der Scankopf geführt wird. Auf diese Weise werden besonders geringe Abstands- und Lagetoleranzen bei gleichzeitig kompaktem Aufbau des Transportmechanismus erreicht.

Als kompakter und zuverlässiger Mechanismus zur Bewegung des Bildträgers am stationären Scankopf vorbei eignet sich beispielsweise ein im Scanner 10 angeordneter Greifarm, welcher zum Herausziehen des Bildträgers aus der Kassette und zum Hineinschieben des Bildträgers in die Kassette geeignet ist und dabei den Bildträger am Scankopf kontinuierlich vorbeibewegt, so dass ein sukzessives zeilenweises Auslesen der Bildinformation erfolgen kann. Der Bildträger weist hierzu geeignete Konturen auf, insbesondere Aussparungen, in welche der Greifarm eingreifen kann.

Im Scanner 10 kann außerdem eine Löscheinrichtung (nicht dargestellt), insbesondere eine Löschlampe, vorgesehen sein, mit deren Hilfe die Bildinformation des Bildträgers nach dem Ausleseprozess gelöscht wird, damit der Bildträger für eine erneute Röntgenaufnahme verwendet werden kann. Die Löscheinrichtung kann im Scanner 10 derart angebracht und angesteuert sein, dass eine vollständige Löschung der nach dem Auslesen im Bildträger verbliebenen Bildinformation während der Rückführung des Bildträgers in die Kassette erfolgt. Dies wird beispielsweise durch eine Anordnung der Löscheinrichtung im Bereich der Öffnung 18 des Scanners 10 und ein Einschalten der Löscheinrichtung während der Rückführung des Bildträgers erreicht. Alternativ kann die Löscheinrichtung am Scankopf angebracht sein und mit diesem über den Bildträger bewegt werden. In einer weiteren Alternative kann das von der Löschlampe ausgehende Licht mit geeigneten optischen Mitteln, wie z. B. Spiegeln und/oder lichtstreuenden Mitteln, derart im Inneren des Scanners 10 verteilt werden, dass ein Löschen der gesamten Fläche des Bildträgers auf einmal möglich ist. Die Löschlampe wird hierbei zum gegebenen Zeitpunkt kurz ein- und wieder ausgeschaltet.

In Figur 6 ist eine vergrößerte schematische Frontansicht einer Hardcopyeinrichtung 26 dargestellt, wobei die Ausführungen zu Figur 1 entsprechend gelten. Wie aus der Rückansicht dieser Hardcopyeinrichtung 26 in Figur 7 hervorgeht, kann auch die Hardcopyeinrichtung 26 Ausgestaltungen 48 zur Aufhängung aufweisen, die der Wandmontage dienen. Auch hier kann eine Höhenverstellbarkeit durch entsprechende Modifizierung der Ausgestaltungen 48 und/oder der entsprechenden Befestigungselemente an der Wand und/oder durch eine demgemäß geartete Aufhängevorrichtung realisiert werden. Bei einer Kombination von Scanner 10 und Hardcopyeinrichtung 26 können beide Komponenten oder nur der Scanner entsprechende Ausgestaltungen zur Aufhängung aufweisen, da die Komponenten so koppelbar sind, dass die Hardcopyeinrichtung 26 durch den Scanner 10 bei der Wandmontage gehalten wird.

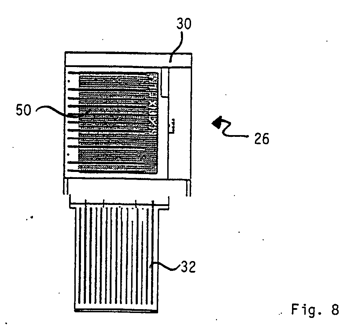

In Figur 8 ist die Hardcopyeinrichtung 26 teilweise im Querschnitt an einer Wand montiert dargestellt. Es ist zu erkennen, dass die Hardcopyrohlinge 50 im Innern der Hardcopyeinrichtung 26 nahezu parallel zur größten Seitenfläche der Hardcopyeinrichtung 26 und damit auch parallel zur Wand gelagert werden können und dass diese entlang einer ebenfalls parallelen oder leicht geneigten Printebene positionierbar sind. Auch der Transport der Hardcopyrohlinge bzw. der Hardcopies kann im Wesentlichen parallel zu einer größten Seitenfläche der Hardcopyeinrichtung 26 und damit auch parallel zur Wand, an der die Hardcopyeinrichtung 26 aufgehängt ist, erfolgen. Auf diese Weise kann die Gerätetiefe der Hardcopyeinrichtung 26 auf weniger als 30 cm minimiert werden.

Wie im Zusammenhang mit den Ausführungsbeispielen näher erläutert wurde, erfolgt die Wandmontage der einzelnen Komponenten, d.h. des Scanners 10 und/oder der Workstationeinrichtung 20 und/oder der Hardcopyeinrichtung 26, vorzugsweise hängend. Eine Wandmontage der jeweiligen Komponente kann jedoch prinzipiell auf jede Art der Anbringung an eine Wand erfolgen, bei welcher keine Standfläche für die jeweilige Komponente auf dem Boden erforderlich ist. Die jeweilige Komponente ist dabei im Wesentlichen nur an der Wand befestigt. Die Befestigung an der Wand kann hierbei direkt, z. B. durch Aufhängen, Festschrauben und dergleichen, oder indirekt, z. B. durch Aufstellen oder Einsetzen der Komponente auf bzw. in eine an der Wand befestigte Halterung oder durch Anbringen an ein an der Wand befestigtes und zur Höhenverstellung der Komponente ausgebildetes Halterungssystem, erfolgen.

Die erfindungsgemäße Wandmontage der kompakten Vorrichtung erlaubt in vielen Fällen eine Integration dieser Vorrichtung in einem Röntgenraum, obwohl dort der zur Verfügung stehende Standplatz meist durch den hohen Abschirmaufwand begrenzt ist. Die Integration der Vorrichtung in den Röntgenraum führt zu erheblichen Vorteilen im Arbeitsablauf einer Röntgenuntersuchung, da hierdurch eine schnelle Kontrolle der Aufnahmequalität in Form einer Darstellung der erfaßten Bilddaten auf einem Bildschirm und/oder einer Hardcopy ermöglicht wird und ein Verlassen des Röntgenraums bzw. des in diesem Raum befindlichen Patienten zur Diagnose anhand der Röntgenaufnahme nicht mehr erforderlich ist. Die Aufhängung innerhalb des Röntgenraums kann insbesondere dort erfolgen, wo vorher ein konventioneller Leuchtschirm angebracht war, um einen Röntgenfilm zu betrachten.

## Patentansprüche

1. Scanvorrichtung zum Erfassen einer Bildinformation eines fotostimulierbaren Bildträgers (44), **dadurch gekennzeichnet, dass** die Scanvorrichtung (10) derart für eine Wandmontage ausgebildet ist, dass die Scanvorrichtung (10) mit einer größten Seitenfläche im Wesentlichen parallel zu einer Wand an der Wand montierbar ist.

2. Scanvorrichtung nach Anspruch 1, **dadurch gekennzeichnet, dass** die Scanvorrichtung (10) zu einer hängenden Wandmontage mindestens eine Ausgestaltung (42) zur Aufhängung an die Wand, insbesondere mindestens ein Aufhängeelement, aufweist.

3. Scanvorrichtung nach Anspruch 2, **dadurch gekennzeichnet, dass** die mindestens eine Ausgestaltung (42) zur Aufhängung derart ausgebildet ist, dass die Scanvorrichtung (10) höhenverstellbar ist.

4. Scanvorrichtung nach einem der vorhergehenden Ansprüche, **dadurch gekennzeichnet, dass** die Scanvorrichtung (10) eine Kassettenhalterung (14, 16) zur Lagerung und/oder zum Bereitstellen mindestens einer Kassette (13) mit einem fotostimulierbaren Bildträger (44) für einen Scanvorgang aufweist.

5. Scanvorrichtung nach Anspruch 4, **dadurch gekennzeichnet, dass** ein Gehäusebereich der Scanvorrichtung ein Halterungselement (14) der Kassettenhalterung (14, 16) bildet, auf der mindestens eine Kassette (13) positionierbar ist.

6. Scanvorrichtung nach einem der Ansprüche 4 oder 5, **dadurch gekennzeichnet, dass** die Kassettenhalterung (14, 16) ein Halterungselement (16) aufweist, das an einem Gehäuse (12) der Scanvorrichtung (10), insbesondere lösbar, befestigt ist.

7. Scanvorrichtung nach einem der Ansprüche 4 bis 6, **dadurch gekennzeichnet, dass** die Kassettenhalterung (14, 16) ein Halterungselement aufweist, das im Wesentlichen vor oder unter einem Gehäuse (12) der Scanvorrichtung (10) angeordnet ist.

8. Scanvorrichtung nach einem der Ansprüche 4 bis 7, **dadurch gekennzeichnet, dass** die Kassettenhalterung (14, 16) derart ausgebildet ist, dass die durch die Kassettenhalterung (14, 16) aufgenommene mindestens eine Kassette (13) im Wesentlichen parallel zu einer größten Seitenfläche der Scanvorrichtung (10) angeordnet ist.

9. Scanvorrichtung nach einem der vorhergehenden Ansprüche, **dadurch gekennzeichnet, dass** die Scanvorrichtung (10) derart ausgebildet ist, dass der fotostimulierbare Bildträger (44) innerhalb der Scanvorrichtung (10) im Wesentlichen parallel zu einer größten Seitenfläche der Scanvorrichtung (10) auslesbar und/oder bewegbar ist.

10. Scanvorrichtung nach einem der vorhergehenden Ansprüche, **dadurch gekennzeichnet, dass** ein Scankopf zum Erfassen der Bildinformation des Bildträgers (44) vorgesehen ist und der Scankopf
- eine Lichtquelle zur Beleuchtung des Bildträgers (44) mit Anregungslicht, welches zur Anregung von Emissionslicht im Bildträger (44) geeignet ist, und
- einen Detektor zum Erfassen des im beleuchteten Bildträger (44) angeregten Emissionslichts
aufweist.

11. Scanvorrichtung nach Anspruch 10, **dadurch gekennzeichnet, dass** die Lichtquelle zur Beleuchtung eines linienförmigen Bereichs auf dem Bildträger (44) ausgebildet ist.

12. Scanvorrichtung nach Anspruch 11, **dadurch gekennzeichnet, dass** die Lichtquelle eine Vielzahl von in einer geraden Linie angeordneten Leuchtmitteln, insbesondere Leuchtdioden (LEDs) und/oder Laserdioden, aufweist.

13. Scanvorrichtung nach einem der Ansprüche 10 bis 12, **dadurch gekennzeichnet, dass** der Detektor zum ortsaufgelösten Erfassen des, insbesondere im linienförmigen Bereich des Bildträgers (44), angeregten Emissionslichts ausgebildet ist.

14. Scanvorrichtung nach Anspruch 13, **dadurch gekennzeichnet, dass** der Detektor eine Vielzahl von entlang einer geraden Linie angeordneten Detektorelementen, insbesondere Photodioden oder Charge-Coupled-Devices (CCDs), aufweist.

15. Scanvorrichtung nach einem der Ansprüche 10 bis 14, **dadurch gekennzeichnet, dass** ein erster Transportmechanismus zur Bewegung des Scankopfes über den Bildträger (44) vorgesehen ist.

16. Scanvorrichtung nach Anspruch 15, **dadurch gekennzeichnet, dass** der erste Transportmechanismus als Linearantrieb ausgebildet ist, welcher einen Antriebsmotor und einen Seilantrieb umfaßt, wobei der Antriebsmotor und der Seilantrieb derart miteinander gekoppelt sind, dass eine Rotationsbewegung des Antriebsmotors in eine Linearbewegung des Seilantriebs umgesetzt wird.

17. Scanvorrichtung nach einem der Ansprüche 10 bis 16, **dadurch gekennzeichnet, dass** eine Scanbühne (46) vorgesehen ist, auf welcher der Bildträger (44) aufliegen und an welcher der Scankopf geführt werden kann.

18. Scanvorrichtung nach Anspruch 17, **dadurch gekennzeichnet, dass** die Scanbühne (46) separate Führungsflächen aufweist, an welchen der Scankopf geführt werden kann.

19. Scanvorrichtung nach einem der Ansprüche 10 bis 18, **dadurch gekennzeichnet, dass** ein zweiter Transportmechanismus zur Bewegung des Bildträgers (44) am Scankopf vorbei vorgesehen ist.

20. Scanvorrichtung nach Anspruch 19, **dadurch gekennzeichnet, dass** der zweite Transportmechanismus mindestens einen Greifarm zur Entnahme eines in einer Kassette (13) bereitgestellten Bildträgers (44) und/oder zur Rückführung eines herausgezogenen Bildträgers (44) in die Kassette (13) umfaßt, wobei der Bildträger (44) während der Entnahme bzw. Rückführung am Scankopf vorbei bewegt wird.

21. Scanvorrichtung nach einem der vorhergehenden Ansprüche, **dadurch gekennzeichnet, dass** in einem Gehäuse (12) der Scanvorrichtung (10) eine Löscheinrichtung zum Löschen der Bildinformation des Bildträgers (44) vorgesehen ist.
